Europäisches Patentamt

European Patent Office

Office européen des brevets

(11) Veröffentlichungsnummer: **0 283 543 B1**

(12) **EUROPÄISCHE PATENTSCHRIFT**

(45) Veröffentlichungstag der Patentschrift: **11.12.91**

(51) Int. Cl.5: **G01M 3/22**

(21) Anmeldenummer: **87104546.4**

(22) Anmeldetag: **27.03.87**

(54) **Lecksuchgerät und Betriebsverfahren dazu.**

(43) Veröffentlichungstag der Anmeldung:
**28.09.88 Patentblatt 88/39**

(45) Bekanntmachung des Hinweises auf die
Patenterteilung:
**11.12.91 Patentblatt 91/50**

(84) Benannte Vertragsstaaten:
**CH DE FR GB IT LI**

(56) Entgegenhaltungen:
**DE-A- 2 713 580          DE-A- 2 924 258**
**DE-A- 3 144 503          DE-C- 2 049 117**
**DE-C- 3 308 555          GB-A- 2 142 150**
**US-A- 3 592 048          US-A- 4 472 962**
**US-A- 4 487 058**

(73) Patentinhaber: **LEYBOLD AKTIENGESELL-**
**SCHAFT**
**Bonner Strasse 498**
**W-5000 Köln 51(DE)**

(72) Erfinder: **Grosse Bley, Werner**
**Ahrweg 3**
**W-5305 Alfter 4(DE)**
Erfinder: **Reich, Günter, Dr.**
**Vochemer Strasse 9**
**W-5000 Köln 51(DE)**

(74) Vertreter: **Leineweber, Jürgen, Dipl.-Phys.**
**Nagelschmiedshütte 8**
**W-5000 Köln 40(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein nach dem Gegenstromprinzip arbeitendes Lecksuchgerät mit einer ersten Hochvakuumpumpstufe, deren Eintrittsseite über ein Ventil mit dem Einlaß des Lecksuchgerätes verbunden ist, mit einer zweiten Hochvakuumpumpstufe, deren Eintrittsseite mit einem Testgas-Detektor (z.B. Massenspektrometer) verbunden ist, und mit einer Vorvakuumpumpe, deren Eintrittsseite mit den Austrittsseiten der Hochvakuumpumpstufen verbunden ist.

Ein Lecksuchgerät dieser Art ist aus der DE-PS 20 49 117 vorbekannt. Im Falle eines Lecks im Prüfgefäß, das sich innerhalb einer Prüfkammer mit Helium-Atmosphäre oder mit einem Helium-Luft-Gemisch befindet, strömt Testgas durch das Leck in das Innere des Prüflings durch die erste Hochvakuumpumpstufe in Förderrichtung und danach - wegen des relativ kleinen Kompressionsvermögens für leichte Gase - durch die zweite Hochvakuumpumpstufe entgegen der Förderrichtung zum Massenspektrometer (Analysatorröhre). Bei einem Lecksuchgerät dieser Art besteht bei einem besonders groben Leck die Gefahr, daß eine relativ große Testgasmenge in das Gerät gelangt. Dieses führt nicht nur zu einer kurzzeitigen Überlastung, sondern auch zu einer längerfristigen Verseuchung des Massenspektrometers, da die endgültige Entfernung des Heliums aus dem Massenspektrometer relativ lange Pumpzeiten erfordert. Auch die übrigen Elemente, insbesondere die Vorpumpe, sind relativ lange mit Helium kontaminiert, so daß unmittelbar nach einer Überlastung durchgeführte Leckmessungen mit großen Fehlern behaftet sind.

Wird der Prüfling - wie es häufig üblich ist - vorab mit einer Vorpumpe so lange über eine separate Leitung evakuiert, bis er mit der Hochvakuumpumpstufe verbunden werden kann, dann besteht bei einem besonders groben Leck die Gefahr, daß während der Vorabevakuierung das in der Prüfkammer befindliche Helium zum großen Teil oder sogar vollständig abgepumpt wurde. Wird danach der Prüfling mit der Hochvakuumpumpstufe verbunden und damit die eigentliche Lecksuche begonnen, dann ist nur noch wenig oder gar kein Testgas mehr feststellbar. Die Folge davon ist, daß der Prüfling als nur geringfügig leck oder sogar als dicht angesehen wird, obwohl er grob undicht ist.

Der vorliegenden Erfindung liegt die Aufgabe zugrunde, ein Lecksuchgerät der eingangs genannten Art so zu gestalten, daß Überlastungen des Massenspektrometers nicht mehr auftreten, daß die Feststellung auch besonders grober Lecks gewährleistet ist und daß eine automatisch ablaufende Lecksuche über einen sehr großen Empfindlichkeitsbereich möglich ist.

Erfindungsgemäß wird diese Aufgabe dadurch gelöst, daß eine zweite Vorvakuumpumpe vorgesehen ist, deren Eintrittseite zum einen über eine mit einem Stellventil ausgerüstete Leitung mit dem Einlaß des Lecksuchgerätes und zum anderen über eine mit einer Drossel ausgestattete Leitung mit der Eintrittsseite der ersten Vorvakuumpumpe verbunden ist. Bei einem in dieser Weise ausgebildeten Lecksuchgerät besteht die Möglichkeit, bereits bei Beginn der Evakuierung des Prüflings mit der Lecksuche zu beginnen. Dazu wird der Prüfling mit Hilfe der zweiten Vorvakuumpumpe evakuiert. Ist ein besonders grobes Leck vorhanden, dann wird bereits in dieser Phase Testgas abgesaugt. Über die die beiden Vorpumpen eintrittsseitig miteinander verbindende Leitung mit der Drossel gelangt ein geringer Teil des Testgases zur Austrittsseite der zweiten Hochvakuumpumpstufe und von dort entgegen ihrer Förderrichtung zum Massenspektrometer. Selbst ein massiv grobes Leck im Prüfling wird dadurch feststellbar. Die Drossel ist ausreichend klein gewählt, so daß die Gefahr der Überlastung oder Verseuchung des Massenspektrometers nicht besteht. Ist in dieser ersten Evakuierphase des Prüflings Testgas nicht festgestellt worden, dann kann nach dem Erreichen eines bestimmten Druckes im Prüfling die Eintrittsseite der ersten Hochvakuumpumpstufe direkt mit dem Prüfling verbunden und eine empfindlichere Lecksuche begonnen werden. Dieser Schritt ist in einfacher Weise in Abhängigkeit des Prüflingsdruckes automatisierbar.

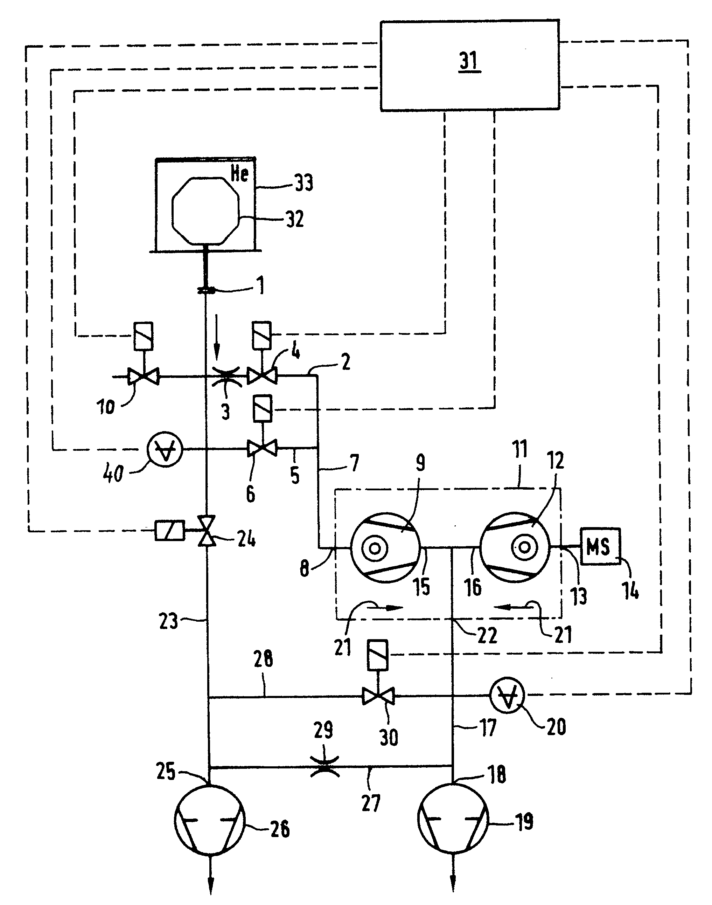

Weitere Vorteile und Einzelheiten der Erfindung sollen anhand eines in der Figur dargestellten Ausführungsbeispiels erläutert werden.

Die Figur zeigt schematisch ein Lecksuchgerät, dessen Einlaß mit 1 bezeichnet ist. Der Einlaß 1 ist über die parallel zueinander geführten Leitungsabschnitte 2 (mit Drossel 3 und Ventil 4) und 5 (mit Ventil 6) sowie die Leitung 7 mit der Eintrittsseite 8 einer Hochvakuumpumpstufe 9 verbunden.

Die Hochvakuumpumpstufe ist ein Stufe einer zweistufigen Turbo-Molekularpumpe 11, deren zweite Stufe mit 12 bezeichnet ist. An die Eintrittsseite 13 der zweiten Stufe 12 ist ein Testgas-Detektor, vorzugsweise ein Massenspektrometer 14, angeschlossen. Die beiden Austrittsseiten 15 und 16 der Hochvakuumpumpstufen 9 und 12 sind gemeinsam über die Vorvakuumleitung 17 mit der Eintrittsseite 18 der (ersten) Vorvakuumpumpe 19 verbunden. An die Vorvakuumleitung 17 ist außerdem noch die Druckmeßstelle 20 angeschlossen.

Die beiden Turbo-Molekularpumpstufen 9 und 12 sind auf einer gemeinsamen Welle angeordnet. Die Anschlüsse 8 und 13 befinden sich im Bereich der äußeren Stirnseiten der Turbo-Molekularpumpe 11. Die beiden Pumpstufen 9 und 12 sind während des Betriebs von außen nach innen (Pfeile 21) durchströmt, so daß nur ein Vorvakuumanschluß 22 vorhanden ist.

Der Einlaß 1 des Lecksuchgerätes ist außerdem über die Leitung 23 mit dem Ventil 24 mit der Eintrittsseite 25 einer zweiten Vorvakuumpumpe 26 verbunden. An diese Leitung 23 sind außerdem noch das Belüftungsventil 10 und die Druckmeßstelle 40 angeschlossen.

Die Eintrittsseiten 18 und 25 der beiden Vorvakuumpumpen 19 und 26 sind über zwei parallele Leitungen 27 und 28 miteinander verbunden. In der Leitung 27 befindet sich eine Drossel 29. Die Leitung 28 ist mit einem Stellventil 30 ausgerüstet.

Zur Automatisierung des Ablaufs der Lecksuche ist eine zentrale Steuerung 31 vorgesehen, die über im einzelnen nicht mit Bezugszeichen versehene Steuerungsleitungen, unter anderem mit den Stellventilen 4, 6, 24 und 30 sowie mit den Druckmeßstellen 20 und 40, verbunden sind.

Bei der Durchführung der Lecksuche mit dem dargestellten Lecksuchgerät wird folgendermaßen verfahren:

Zunächst wird bei geschlossenen Ventilen 4, 6, 24 und 30 das Lecksuchgerät in seinen betriebsbereiten Zustand versetzt, indem die Turbo-Molekularpumpe 11 und die Vorvakuumpumpen 19 und 26 eingeschaltet werden. Das Gerät ist betriebsbereit, wenn der Druck im Massenspektrometer 14 kleiner als $10^{-4}$ mbar ist bzw. wenn die Drehzahl der Turbo-Molekularpumpe 11 ihren Sollwert erreicht hat und wenn der Vorvakuumdruck (Meßgerät 20) kleiner ist als der maximal zulässige Druck (z.B. 0,1 mbar).

Der zu untersuchende Prüfling 32, der sich in der Prüfkammer 33 befindet, wird an den Einlaß 1 des Lecksuchgerätes angeschlossen. In der Prüfkammer 33 befindet sich Testgas, vorzugsweise Helium, das während der Lecksuche in den Prüfling eindringt, falls dieser leck ist. Auf die Prüfkammer 33 kann verzichtet werden, wenn der Prüfling 32 - wie häufig üblich - mit Helium besprüht wird.

Zur Einleitung der Lecksuche werden das gegebenenfalls noch geöffnete Belüftungsventil 10 geschlossen und das in der Leitung 23 befindliche Ventil 24 geöffnet. Dadurch wird die Verbindung des Prüflings 32 mit der Vorvakuumpumpe 26 hergestellt, so daß der Prüfling evakuiert wird.

Weist der Prüfling ein besonders grobes Leck (z.B. mit einer Leckrate von 1000 bis 0,1 mbar l/s) auf, dann wird bereits in dieser ersten Evakuierphase Helium mit abgesaugt. Dieses gelangt über die Drossel 29 in der Leitung 27, die Leitung 17 im Gegenstrom durch die Turbo-Molekularpumpstufe 12 zum Massenspektrometer 14 und wird dort registriert. Die Lecksuche wird in diesem Fall abgebrochen; das Ventil 24 wird geschlossen. Über das Ventil 10 erfolgt die Belüftung des Prüflings 32, so daß dieser vom Einlaß 1 abgenommen und durch einen neuen Prüfling ersetzt werden kann.

Ist der Prüfling nicht grob undicht, wird der Druck im Inneren des Prüflings, registriert durch die Druckmeßstelle 40, relativ schnell sinken. Hat er einen Wert von etwa 100 mbar erreicht, wird das Ventil 4 geöffnet, so daß die Hochvakuumpumpstufe 9 über die Drossel 3 mit der Leitung 23 bzw. mit dem Einlaß 1 und damit mit dem Prüfling verbunden ist. Dringt während der weiteren Evakuierung bis etwa auf einen Druck von 0,1 mbar Helium in den Prüfling 32 ein, dann gelangt dieses über die Drossel 3 und die beiden Hochvakuumpumpstufen 9 und 12 zum Massenspektrometer 14. Die Lecksuche kann in diesem Fall abgebrochen werden. Lecks mit Leckraten in der Größenordnung von etwa 10 bis $10^{-5}$ mbar l/s sind während dieser Lecksuchphase feststellbar.

Ist während dieser Phase Helium noch nicht vom Massenspektrometer 14 registriert worden, beginnt eine weitere Lecksuche mit noch höherer Empfindlichkeit, indem die Verbindung zur Hochvakuumpumpstufe 9 ungedrosselt freigegeben wird.

Dazu werden bei einem Druck von etwa 0,1 mbar im Prüfling 32 das Ventil 24 geschlossen und die Ventile 6 sind 30 geöffnet. Die Evakuierung des Prüflings erfolgt dadurch über die Hochvakuumpumpstufe 9 und beide Vorpumpen 19 und 26. Gegebenenfalls mitgefördertes Helium gelangt durch die Turbo-Molekularpumpstufe 12 zum Massenspektrometer 14. Lecks mit Leckraten von etwa $10^{-3}$ bis $10^{-9}$ mbar l/s sind in dieser Lecksuchphase feststellbar.

Ist der Prüfling nach wie vor dicht, dann wird sein Innendruck weiter sinken. Sinkt der Druck auf etwa $2 \cdot 10^{-2}$ mbar (Meßgerät 20), dann kann eine noch empfindlichere Lecksuchphase begonnen werden, indem das Ventil 30 geschlossen wird. Das Saugvermögen des Vorvakuumpumpsystems nimmt dadurch stark ab, so daß die Lecksuche entsprechend empfindlicher wird. Wird auch in dieser Phase Helium vom Massenspektrometer 14 nicht registriert, dann kann der Prüfling 32 als dicht bezeichnet werden.

Das Saugvermögen der Vorvakuumpumpe 26 (z.B. 25 oder 36 m³/h) ist zweckmäßigerweise um den Faktor 5 bis 10 größer als das Saugvermögen der Vorvakuumpumpe 19 (z.B. 4 m³/h). Dadurch ergibt sich der Vorteil, daß die Evakuierung des Prüflings 32 während der ersten Lecksuchphasen relativ schnell erfolgt. Ist während der letzten Lecksuchphase nur noch die relativ kleine Vorpumpe 19 wirksam, dann ist die Empfindlichkeit der Lecksuche so groß, daß selbst Lecks bis zu $10^{-10}$ mbar l/s feststellbar sind.

Die Größe der Drossel 29 ist so gewählt, daß sie bei einer Druckdifferenz von etwa 1000 mbar ein Leck mit einer Leckrate von etwa 0,1 mbar l/s darstellt. Für die erste Phase der Lecksuche nach besonders groben Lecks reicht diese Größe aus. Mit kleiner werdender Druckdifferenz nimmt die durch die Drossel 29 strömende Gasrate sehr schnell ab, so daß sie während der anderen Lecksuchphasen vernachlässigbar ist.

Die Drossel 3 wird so eingestellt, daß der Vorvakuumdruck (Meßgerät 20) kleiner/gleich 0,1 mbar bei einem Einlaßdruck (Meßerät 40) kleiner gleich 100 mbar ist. Bei einer Vorpumpe mit einem Saugvermögen von 4 m³/h (d.h. etwa gleich 1 l/s) fließt dann ein Gasstrom von 0,1 mbar l/s. Drossel 29 und Ventil 30 können durch ein regelbares Drosselventil ersetzt werden.

In der Figur und in der Beschreibung wurde nur der Fall berücksichtigt, daß ein in einer Prüfkammer 33 befindlicher Prüfling 32 an den Anschluß 1 des Lecksuchgerätes angeschlossen wird. Natürlich besteht auch die Möglichkeit, daß der Prüfling 32 selbst mit Helium gefüllt ist. In diesem Falle ist das Innere der Prüfkammer 33 an den Einlaß 1 des Lecksuchgerätes anzuschließen. Schließlich kann an den Einlaß 1 auch ein Sondenschlauch angeschlossen sein, mit dem ein mit Helium gefüllter Prüfling untersucht wird.

Zur zunächst gedrosselten und dann ungedrosselten Verbindung des Einlasses 1 des Lecksuchgerätes mit der Hochvakuumpumpstufe 9 sind zwei zueinander parallele Leitungsabschnitte 2, 5 mit den Ventilen 4, 6 und der Drossel 3 vorgesehen. Es besteht auch die Möglichkeit, diese Elemente durch ein einziges regelventil zu ersetzen, das zwischen der kleinsten gewünschten Gasrate und der ungedrosselten Offenstellung regelbar ist.

**Patentansprüche**

1. Nach dem Gegenstromprinzip arbeitendes Lecksuchgerät mit einer ersten Hochvakuumpumpstufe (9), deren Eintrittsseite (8) über ein Ventil (6) mit dem Einlaß (1) des Lecksuchgerätes verbunden ist, mit einer zweiten Hochvakuumpumpstufe (12), deren Eintrittsseite (13) mit einem Massenspektrometer (14) verbunden ist, und mit einer Vorvakuumpumpe (19), deren Eintrittsseite (18) mit den Austrittsseiten (15, 16) der Hochvakuumpumpstufen (9, 12) verbunden ist, gekennzeichnet durch eine zweite Vorvakuumpumpe (26), deren Eintrittsseite (25) zum einen über eine mit einem Stellventil (24) ausgerüstete Leitung (23) mit dem Einlaß (1) des Lecksuchgerätes und zum anderen über eine mit einer Drossel (29) ausgestattete Leitung (27) mit der Eintrittsseite (18) der ersten Vorvakuumpumpe (19) verbunden ist.

2. Lecksuchgerät nach Anspruch 1, dadurch gekennzeichnet, daß in der Leitung (2), welche den Einlaß (1) des Lecksuchgerätes mit der Eintrittseite (8) der ersten Hochvakuumpumpstufe (9) verbindet, ein Stellventil (4) und eine Drossel (3) hintereinander angeordnet sind.

3. Lecksuchgerät nach Anspruch 2, dadurch gekennzeichnet, daß parallel zum Leitungsabschnitt (2) mit dem Stellventil (4) und der Drossel (3) ein weiterer Leitungsabschnitt (5) vorgesehen ist, in dem sich ein weiteres Stellventil (6) befindet.

4. Lecksuchgerät nach Anspruch 1, dadurch gekennzeichnet, daß anstelle der Leitungsabschnitte (2, 5), die den Einlaß (1) des Lecksuchgerätes mit der Eintrittsseite (8) der ersten Hochvakuumpumpstufe (9) verbinden, eine einzige Leitung mit einem regelbaren Drosselventil angeordnet ist.

5. Lecksuchgerät nach einem der Ansprüche 1 bis 4, dadurch gekennzeichnet, daß parallel zu der mit der Drossel (29) ausgerüsteten Leitung (27), welche die Eintrittsseiten (18, 25) der Vorvakuumpumpen (19, 26) miteinander verbindet, eine mit einem Stellventil (30) ausgerüstete Leitung (28) vorgesehen ist.

6. Lecksuchgerät nach Anspruch 5, dadurch gekennzeichnet, daß anstelle der Leitungsabschnitte (27, 28) mit Drossel (29) und Ventil (30) nur eine Leitung mit einem regelbaren Drosselventil vorgesehen ist.

7. Lecksuchgerät nach einem der vorhergehenden Ansprüche dadurch gekennzeichnet, daß das Saugvermögen der zweiten Vorvakuumpumpe (26) größer ist als das Saugvermögen der ersten Vorvakuumpumpe (19).

8. Lecksuchgerät nach einem der vorhergehenden Ansprüche, dadurch gekennzeichnet, daß die Leckrate der Drossel (29) in der die Eintrittseiten (18, 25) der Vorvakuumpumpen (19, 26) miteinander verbindenden Leitung (27) etwa 0,1 mbar l/s beträgt, und zwar bei einer Druckdifferenz von etwa 1000 bar.

9. Lecksuchgerät nach einem der vorhergehenden Ansprüche, dadurch gekennzeichnet, daß die beiden Hochvakuumpumpstufen (9, 12) als Turbo-Molekularpumpstufen ausgebildet sind, deren Rotoren auf einer gemeinsamen Welle angeordnet sind, daß die Anschlüsse (13, 8) für das Massenspektrometer (14) und den Einlaß (1) des Lecksuchgerätes derart einander gegenüberliegend im Bereich der äußeren Stirnseiten des Pumpsystems angeordnet sind, daß die beiden Pumpstufen (9, 12) während des Betriebs von außen nach innen durchströmt sind, und daß zwischen den beiden Pumpstufen ein gemeinsamer Vorvakuumanschluß (22) vorgesehen ist.

10. Betriebsverfahren eines Lecksuchgerätes nach Anspruch 1 mit einem an den Einlaß (1) des Lecksuchgerätes angeschlcssenen Prüfling (32), dadurch gekennzeichnet, daß zunächst die Verbindung zwischen dem Einlaß (1) des Lecksuchgerätes und der zweiten Vorvakuumpumpe (25) hergestellt wird.

11. Betriebsverfahren nach Anspruch 10, angewendet bei einem Lecksuchgerät nach Anspruch 2, dadurch gekennzeichnet, daß nach der Herstellung der Verbindung zwischen dem Einlaß (1) des Lecksuchgerätes und der zweiten Vorvakuumpumpe (26) und nach einer Absenkung des Druckes im Prüfling (32) auf etwa 100 mbar die Verbindung zwischen dem Einlaß (1) und der ersten Hochvakuumpumpstufe (9) über die Drossel (3) und das Ventil (4) hergestellt wird.

12. Betriebsverfahren nach Anspruch 11, angewendet bei einem Lecksuchgerät nach Anspruch 3, dadurch gekennzeichnet, daß nach einem weiteren Absinken des Druckes im Prüfling (32) auf etwa 0,1 mbar die Verbindung zwischen dem Einlaß (1) des Lecksuchgerätes und der ersten Hochvakuumpumpstufe (9) ungedrosselt freigegeben wird.

13. Betriebsverfahren nach Anspruch 10, angewendet bei einem Lecksuchgerät nach Anspruch 5, dadurch gekennzeichnet, daß nach einem Absinken des Druckes im Prüfling (32) auf etwa 0,1 mbar die Verbindung zwischen dem Einlaß (1) des Lecksuchgerätes und der Eintrittsseite (25) der zweiten Vorvakuumpumpe (26) geschlossen und die Verbindungen zwischen dem Einlaß (1) des Lecksuchgerätes und der ersten Hochvakuumpumpstufe (9) sowie die Verbindung zwischen den Eintrittsseiten (18, 25) der Vorvakuumpumpen (19, 26) ungedrosselt freigegeben werden.

14. Betriebsverfahren nach Anspruch 13, angewendet bei einem Lecksuchgerät nach Anspruch 3 und 5, dadurch gekennzeichnet, daß bei einem Druck von etwa $10^{-2}$ mbar die ungedrosselte Verbindung zwischen den Eintrittsseiten (18, 25) der Vorvakuumpumpen (19, 26) geschlossen wird.

**Claims**

1. A leak-detecting apparatus operating according to the counterflow principle, comprising a first high vacuum pump stage (9), whose inlet side (8) is connected via a valve (6) with the inlet (1) of the leak-detecting apparatus, a second high vacuum pump stage (12), whose inlet side (13) is connected with a mass spectrometer (14), and a pre-vacuum pump (19), whose inlet side (18) is connected with the outlet sides (15, 16) of the high vaccum pump stages (9, 12), characterised by a second pre-vacuum pump (26), whose inlet side (25) is connected on the one hand via a line (23) fitted with a regulating valve (24) to the inlet (1) of the leak-detecting apparatus and on the other hand via a line (27) fitted with throttle (29) to the inlet side (18) of the first pre-vacuum pump (19).

2. A leak-detecting apparatus according to claim 1, characterised in that a regulating valve (4) and a throttle (3) are arranged one behind the other in the line (2) connecting the inlet (1) of the leak-detecting apparatus with the inlet side (8) of the first high vacuum pump stage (9).

3. A leak-detecting apparatus according to claim 2, characterised in that a further line section (5) is provided parallel to the line section (2) with the regulating valve (4) and the throttle (3), in which further line section (5) a second regulating valve (6) is arranged.

4. A leak-detecting apparatus according to claim 1, characterised in that in place of the line sections (2, 5) connecting the inlet (1) of the leak-detecting apparatus with the inlet side (8) of the first high vacuum pump stage (9), a single line with a controllable throttle valve is provided.

5. A leak-detecting apparatus according to one of claims 1 to 4, characterised in that a line (28) fitted with a regulating valve (30) is provided parallel to the line (27) fitted with the throttle (29) and connecting the inlet sides (18, 25) of the pre-vacuum pumps (19, 26) with one another.

6. A leak-detecting apparatus according to claim 5, characterised in that in place of the line sections (27, 28) with the throttle (29) and valve (30), only one line having a single controllable throttle valve is provided.

7. A leak-detecting apparatus according to one of the preceding claims, characterised in that the suction capacity of the second pre-vacuum pump (26) is greater than the suction capacity of the first pre-vacuum pump (19).

8. A leak-detecting apparatus according to one of the preceding claims, characterised in that the leakage rate of the throttle (29) in the line (27) connecting the inlet sides (18, 25) of the pre-vacuum pumps (19, 26) with one another is approximately 0,1 mbar l/s at a pressure difference of approximately 1000 bar.

9. A leak-detecting apparatus according to one of the preceding claims, characterised in that the two high vacuum pump stages (9, 12) are designed as turbo-molecular pump stages, whose rotors are arranged on a common shaft, the connections (13, 8) for the mass spectrometer (14) and the inlet (1) of the leak-detecting apparatus are arranged opposite one another in the region of the outer end faces of the pump system in such a manner that, during operation, the flow passes through the two pump stages (9, 12) from the outside to the inside, and a common pre-vacuum connection (22) is provided between the two pump stages.

10. Operating method of a leak-detecting apparatus according to claim 1 comprising a test piece (32) connected to the inlet (1) of the leak-detecting apparatus, characterised in that the connection between the inlet (1) of the leak-detecting apparatus and the second pre-vacuum pump (25) is formed firstly.

11. Operating method according to claim 10 used in a leak-detecting apparatus according to claim 2, characterised in that, after the formation of the connection between the inlet (1) of the leak-detecting apparatus and the second pre-vacuum pump (26) and after a reduction in the pressure in the test piece (32) to approximately 100 mbar, the connection between the inlet (1) and the first high vacuum pump stage (9) is formed via the throttle (3) and the valve (4).

12. Operating method according to claim 11 used in a leak-detecting apparatus according to claim 3, characterised in that, after a further reduction in the pressure in the test piece (32) to approximately 0.1 mbar, the connection between the inlet (1) of the leak-detecting apparatus and the first high vacuum pump stage (9) is unthrottled.

13. Operating method according to claim 10 used in a leak-detecting apparatus according to claim 5, characterised in that, after a reduction in the pressure in the test piece (32) to approximately 0.1 mbar, the connection between the inlet (1) of the leak-detecting apparatus and the inlet side (25) of the second pre-vacuum pump (26) is closed and the connections between the inlet (1) of the leak-detecting apparatus and the first high vacuum pump stage (9) as well as the connection between the inlet sides (18, 25) of the pre-vacuum pumps (19, 26) are unthrottled.

14. Operating method according to claim 13 used in a leak-detecting apparatus according to claims 3 and 5, characterised in that, at a pressure of approximately $10^{-2}$ mbar, the unthrottled connection between the inlet sides (18, 25) of the pre-vacuum pumps (19, 26) is closed.

**Revendications**

1. Appareil de recherche de fuites opérant selon le principe du contre-courant, comportant un premier étage de pompe à vide poussé (9) dont le côté entrée (8) est relié, par l'intermédiaire d'une vanne (6), à l'entrée (1) de l'appareil de recherche de fuites, un deuxième étage de pompe à vide poussé (12) dont le côté entrée (13) est relié à un spectromètre de masse (14), et une pompe à vide préliminaire (19) dont le côté entrée (18) est relié aux côtés sortie (15, 16) des étages de pompe à vide poussé (9, 12), caractérisé par une deuxième pompe à vide préliminaire (26) dont le côté entrée (25) est relié d'une part, par l'intermédiaire d'une conduite (23) équipée d'une servo-vanne (24), à l'entrée (1) de l'appareil de recherche de fuites et d'autre part, par l'intermédiaire d'une conduite (27) équipée d'un organe d'étranglement (29), au côté entrée (18) de la première pompe à vide préliminaire (19).

2. Appareil de recherche de fuites selon revendication 1, caractérisé par le fait qu'une servo-vanne (4) et un organe d'étranglement (3) sont agencés l'un à la suite de l'autre sur la conduite (2) qui relie l'entrée (1) de l'appareil de recherche de fuites au côté entrée (8) du premier étage de pompe à vide poussé (9).

3. Appareil de recherche de fuites selon revendication 2, caractérisé par le fait qu'en parallèle de la portion de conduite (2) dotée de la servo-vanne (4) et de l'organe d'étranglement (3) il est prévu une autre portion de conduite (5) sur laquelle se trouve une autre servo-vanne (6).

4. Appareil de recherche de fuites selon revendication 1, caractérisé par le fait qu'une seule conduite avec une vanne d'étranglement réglable est agencée à la place des portions de conduites (2, 5) qui relient l'entrée (1) de l'appareil de recherche de fuites au côté entrée (8) du premier étage de pompe à vide poussé (9).

5. Appareil de recherche de fuites selon l'une des revendications 1 à 4, caractérisé par le fait qu'une conduite (28) équipée d'une servo-vanne (30) est prévue en parallèle de la conduite (27) qui est équipée de l'organe d'étranglement (29) et qui relie les côtés entrée (18, 25) des pompes à vide préliminaire (19, 26).

6. Appareil de recherche de fuites selon revendication 5, caractérisé par le fait que seule une conduite avec une vanne d'étranglement réglable est prévue à la place des portions de conduite (27, 28) avec organe d'étranglement (29) et vanne (30).

7. Appareil de recherche de fuites selon l'une des revendications précédentes, caractérisé par le fait que la capacité d'aspiration de la deuxième pompe à vide préliminaire (26) est plus grande que la capacité d'aspiration de la première pompe à vide préliminaire (19).

8. Appareil de recherche de fuites selon l'une des revendications précédentes, caractérisé par le fait que le débit de fuite de l'organe d'étranglement (29) sur la conduite (27) reliant les cotés entrée (18, 25) des pompes à vide préliminaire (19, 26) vaut environ 0,1 mbar l/s, cela pour une différence de pression de l'ordre de 1000 bars.

9. Appareil de recherche de fuites selon l'une des revendications précédentes, caractérisé par le fait que les deux étages de pompe à vide poussé (9, 12) sont réalisés en tant qu'étages de pompe turbomoléculaire dont les rotors sont agencés sur un arbre commun, par le fait que les raccords (13, 8) pour le spectromètre de masse (14) et pour l'entrée (1) de l'appareil de recherche de fuites sont agencés en vis-à-vis dans la région des côtés frontaux externes du système de pompe de manière telle que les deux étages de pompe (9, 12) soient parcourus par un écoulement de l'extérieur vers l'intérieur pendant le fonctionnement, et par le fait qu'un raccord de vide préliminaire (22) commun est prévu entre les deux étages de pompe.

10. Procédé de fonctionnement d'un appareil de recherche de fuites selon revendication 1, avec un objet à contrôler (32) raccordé à l'entrée (1) de l'appareil de recherche de fuites, caractérisé par le fait que l'on réalise d'abord la communication entre l'entrée (1) de l'appareil de recherche de fuites et la deuxième pompe à vide préliminaire (25).

11. Procédé de fonctionnement selon revendication 10, mis en oeuvre avec un appareil de recherche de fuites selon revendication 2, caractérisé par le fait que la communication entre l'entrée (1) et le premier étage de pompe à vide poussé (9) est réalisée via l'organe d'étranglement (3) et la vanne (4) après l'établissement de la communication entre l'entrée (1) de l'appareil de recherche de fuites et la deuxième pompe à vide préliminaire (26) et après une diminution à environ 100 mbar de la pression dans l'objet à contrôler (32).

12. Procédé de fonctionnement selon revendication 11, mis en oeuvre avec un appareil de recherche de fuites selon revendication 3, caractérisé par le fait que la communication entre l'entrée (1) de l'appareil de recherche de fuites et le premier étage de pompe à vide poussé (9) est libérée sans restriction, après une autre diminution à environ 0,1 mbar, de la pression dans l'objet à contrôler (32).

13. Procédé de fonctionnement selon revendication 10, mis en oeuvre avec un appareil de recherche de fuites selon revendication 5, caractérisé par le fait qu'après une diminution à environ 0,1 mbar, de la pression dans l'objet à contrôler (32) on ferme la communication entre l'entrée (1) de l'appareil de recherche de fuites et le côté entrée (25) de la deuxième pompe à vide préliminaire (26), et on libère sans restriction les communications entre l'entrée (1) de l'appareil de recherche de fuites et le premier étage de pompe à vide poussé (9) ainsi que la communication entre les côtés entrée (18, 25) des pompes à vide préliminaire (19, 26).

14. Procédé de fonctionnement selon revendication 13, mis en oeuvre avec un appareil de recherche de fuites selon revendications 3 et 5, caractérisé, par le fait que la communication non restreinte entre les côtés entrée (18, 25) des pompes à vide préliminaire (19, 26) est fermée à une pression de l'ordre de $10^{-2}$ mbar.